# EUROPEAN PATENT SPECIFICATION

(11) **EP 3 285 180 B1**
(45) Date of publication and mention of the grant of the patent: **12.08.2020**
(21) Application number: 16779519.4
(22) Date of filing: 25.03.2016
(51) Int. Cl.: G07F 17/30, G06Q 40/00, G06F 1/12, G06F 1/14

(54) **METHOD AND DEVICE FOR ACHIEVING CROSS-TIME-DOMAIN CONSISTENCY IN DISTRIBUTED SYSTEM**
VERFAHREN UND VORRICHTUNG ZUR ERZIELUNG VON ZEITDOMÄNENÜBERGREIFENDER KONSISTENZ IN EINEM VERTEILTEN SYSTEM
PROCÉDÉ ET DISPOSITIF DE MISE EN OEUVRE D'UNE COHÉRENCE ENTRE DES DOMAINES TEMPORELS DANS UN SYSTÈME DISTRIBUÉ

(30) Priority: 17.04.2015 CN 201510183965
(43) Date of publication of application: 21.02.2018
(73) Proprietor: Alibaba Group Holding Limited, Grand Cayman (KY)
(72) Inventor: YU, Jing, Hangzhou 310099 (CN)
(74) Representative: Conroy, John
(86) International application number: PCT/CN2016/077303
(87) International publication number: WO 2016/165544

(56) References cited:
- EP-A1- 0 934 568
- CN-A- 102 238 719
- CN-A- 102 693 324
- CN-A- 103 116 544
- CN-A- 103 763 055
- CN-A- 103 763 142
- CN-A- 104 202 204
- CN-A- 104 243 515
- US-A1- 2014 277 592

## Description

### Technical Field

The present patent relates to the field of electronic technologies, and in particular, to a method and an apparatus for implementing cross-time domain consistency in a distributed system.

### Background Art

A conventional financial calculation model is a centralized computing architecture based on financial data centers, which has, in specific locations, data centers divided in a geographical way. The data center in each specific location only deals with data calculation and processing in some areas. Although the conventional centralized computing architecture based on financial data centers can complete processing of existing bank services well, it cannot well satisfy requirements on development of new financial services and new institutions due to the absence of a distributed architecture and a financial cloud calculation model and the absence of dynamic development and elastic application support.

Directed to the foregoing problems, a distributed financial system in the prior art can well solve the foregoing problems. However, when service simulation is carried out in the distributed system (for example, simulation of a loan service), as times of different application servers are not synchronous and it is impossible to synchronize a time of a database with the times of the application servers, a problem that the service simulation cannot be completed smoothly arises.

EP 0 934 568 describes an independent distributed database system comprising a plurality of sites wherein all users at all sites work off-line with local data. All application transactions are against the local database only, and every site stores "all and only" the data it needs. On-line transactions occur only in the background, including a periodical "synch" between sites that transmits any changes to data of interest to that site. If the background operations are interrupted or the network is temporarily unavailable, the user does not sec new changes made at other sites until the data link is available again, but is otherwise unaffected. It is a feature that no site acts as a "server" for any other site. Some sites may store more data or have more users than others, but all sites are logically peers.

### Summary of the Invention

The invention is defined by the independent claims. Preferred embodiments are defined in the dependent claims.

An objective of embodiments of the present patent is to provide a method and an apparatus for implementing cross-time domain consistency in a distributed system, for solving the problem in the prior art that modifying a time of a database server leads to database failure and it is impossible to obtain time consistency between the database server and application servers, as a result that service simulation cannot be completed. For a distributed system, especially an application scenario which involves service simulation in the field of finance, the technical solution of the present patent can carry out financial service simulation flexibly as required, and ensure consistency between a service generation time and an accounting time within any desired time, thus ensuring that inconsistency between the service generation time and the accounting time would not lead to service failure.

The embodiments of the present patent provide a method for implementing cross-time domain consistency in a distributed system, including:
synchronizing times of application servers according to a set target time;
obtaining, through calculation, a time offset between the target time and a time of a database server, and sending the time offset to the application servers; and
modifying, according to the time offset, time functions in database operation instructions generated by the application servers, to implement cross-time domain consistency in the distributed system.

The embodiments of the present patent further provide an apparatus for implementing cross-time domain consistency in a distributed system, including:
an application server synchronization unit configured to synchronize times of application servers according to a set target time;
a time offset calculation unit configured to obtain, through calculation, a time offset between the target time and a time of a database server, and send the time offset to the application servers; and
a time function modification unit configured to modify, according to the time offset, time functions in database operation instructions generated by the application servers, to implement cross-time domain consistency in the distributed system.

It can be seen from the above technical solutions provided in the embodiments of the present patent that the problem in the prior art that frequently modifying a time of a database server leads to database failure so that service simulation cannot be completed can be solved. For a distributed system, especially an application scenario which involves service simulation in the field of finance, the technical solution of the present patent can carry out financial service simulation flexibly as required, and ensure consistency between a service generation time and an accounting time within any desired time, thus ensuring that inconsistency between the service generation time and the accounting time would not lead to service failure.

Definitely, any product or method implementing the present patent may not necessarily need to achieve all the above advantages at the same time.

### Brief Description of the Drawings

In order to describe the technical solutions in the embodiments of the present patent or the prior art more clearly, the accompanying drawings to be used in the descriptions about the embodiments or the prior art will be introduced briefly in the following. It is apparent that the accompanying drawings in the following descriptions are merely some embodiments described in the present patent. Those of ordinary skill in the art may further obtain other accompanying drawings according to these accompanying drawings without making creative efforts.
FIG 1 is a flowchart of a method for implementing cross-time domain consistency in a distributed system according to an embodiment of the present patent;
FIG. 2 is a schematic structural diagram of an apparatus for implementing cross-time domain consistency in a distributed system according to an embodiment of the present patent;
FIG. 3 is a schematic structural diagram of a system for implementing cross-time domain consistency in a financial system according to an embodiment of the present patent; and
FIG. 4 is a flowchart of a method for implementing cross-time domain consistency in a distributed financial system according to an embodiment of the present patent.

### Detailed Description

The embodiments of the present patent provide a method and an apparatus for implementing cross-time domain consistency in a distributed system.

To make those skilled in the art better understand the technical solutions in the present patent, the technical solutions in the embodiments of the present patent will be described clearly and completely below with reference to the accompanying drawings in the embodiments of the present patent. It is apparent that the described embodiments are merely some, rather than all, of the embodiments of the present patent. Based on the embodiments in the present patent, all other embodiments obtained by those of ordinary skill in the art without making creative efforts should fall within the protection scope of the present patent.

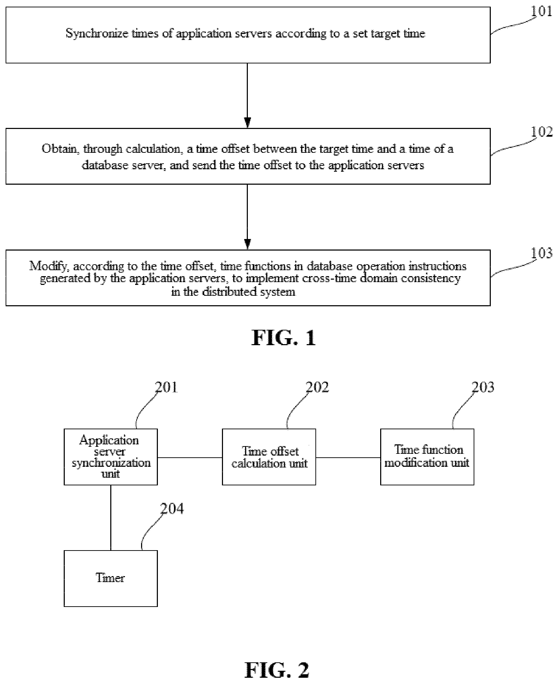

FIG. 1 is a flowchart of a method for implementing cross-time domain consistency in a distributed system according to an embodiment of the present patent.

FIG 1 shows a technical solution in the present patent proposed for a problem of time asynchronization occurring in a distributed financial system. When service simulation is carried out, service times of application servers and databases involved in all services can be synchronized, to implement service simulation. For example, in order to check security of accounts of some users in the financial system, it is necessary to simulate a service in a set time (which is generally a time in the future) and operate the accounts of the users, to check states of the accounts of the users in the set time.

The figure of this embodiment includes:
Step 101: Times of application servers are synchronized according to a set target time.
Step 102: A time offset between the target time and a time of a database server is obtained through calculation, and the time offset is sent to the application servers.
Step 103: Time functions in database operation instructions generated by the application servers are modified according to the time offset, to implement cross-time domain consistency in the distributed system.

As an embodiment of the present patent, the application servers include application servers related to services in service simulation, and the database server includes database servers related to the services in the service simulation. In an implementation scenario, the distributed system may include multiple application servers and database servers set in a distributed way. When service simulation is carried out, for example, when simulation of a loan service is carried out, it is only necessary to involve application servers related to the loan service and corresponding database servers, and times of other application servers and database servers irrelevant to the simulation of the loan service do not need to be synchronized. Definitely, times of all application servers and database servers in the distributed system may also be synchronized.

As an embodiment of the present patent, the application servers include multiple application servers in the distributed system, and the database server includes one or more database servers in the distributed system.

As an embodiment of the present patent, the synchronizing times of application servers according to a set target time further specifically includes: selecting one application server as a time server, adjusting a time of the time server to the target time, and synchronizing times of the remaining application servers with the time of the time server by taking the time of the time server as a reference.

As an optional embodiment, it is possible to take the target time as a target of synchronization, directly send a control instruction or script of adjusting a system time to the application servers related to services, and synchronize times of all the application servers related to services, that is, time synchronization of the application servers can be implemented without selecting one application server as a time server.

As an embodiment of the present patent, the synchronizing times of the remaining application servers with the time of the time server by taking the time of the time server as a reference further includes: synchronizing times of the remaining application servers with the time of the time server by taking a time interval as a cycle. The time interval may be 10 minutes, 15 minutes, or the like. Due to differences between hardware of the application servers, as time goes on, times of the application servers may also not be synchronous with each other after one-time synchronization. At this point, periodically synchronizing the times of the application servers can ensure accuracy of time synchronization, to facilitate the following calculation of the time offset.

As an embodiment of the present patent, the obtaining, through calculation, a time offset between the target time and a time of a database server, and sending the time offset to the application servers further specifically includes: acquiring a time of the database server, subtracting the time of the database server from the target time to obtain the time offset, and pushing the time offset to the application servers. When an application server that obtains a database time offset instruction executes a database SQL instruction, the application server may perform time offset on a time function in the SQL instruction, thus achieving, by relying on the time of the database server (i.e., the time acquired from the SQL instruction), consistency between the time of the database server and the time of the application server without modifying the time of the database server.

The time of the database server may be obtained through an instruction of acquiring a time of a database in the prior art. For example, a financial service acquires a time of a database server as a service time through a SQL instruction: select now() from dual. In the SQL, now() is a database time function. In the prior art, the instruction of acquiring a time may vary for different databases, which is not further described herein.

As an embodiment of the present patent, the modifying, according to the time offset, time functions in database operation instructions generated by the application servers further specifically includes: modifying time functions related to services in the database operation instructions generated by the application servers.

The database operation instructions generated by the application servers may include several time functions. In the present patent, it is only necessary to modify or replace time functions related to service simulation, while it is not necessary to modify all time functions. Modification on the time functions may be adding the time offset to the time functions in the database operation instructions to obtain a modified time.

Through the method in the embodiment of the present patent, the problem in the prior art that frequently modifying a time of a database server leads to database failure so that service simulation cannot be completed can be solved. For a distributed system, especially an application scenario which involves service simulation in the field of finance, the technical solution of the present patent can carry out financial service simulation flexibly as required, and obtain states of accounts in a future period of time, thus ensuring information security of users and financial institutions.

FIG. 2 is a schematic structural diagram of an apparatus for implementing cross-time domain consistency in a distributed system according to an embodiment of the present patent.

The figure shows a structure of an apparatus for implementing cross-time domain consistency in a distributed system. When the method of the embodiment in FIG 1 is implemented in the apparatus, for example, components configured to calculate a time offset and modify time functions in database operation instructions and the like may all be implemented through software or hardware logic circuits that implement the corresponding functions, and may be integrated in the application servers, and one or more computers may also be provided separately to complete the foregoing functions.

The apparatus includes an application server synchronization unit 201 configured to synchronize times of application servers according to a set target time,
a time offset calculation unit 202 configured to obtain, through calculation, a time offset between the target time and a time of a database server, and send the time offset to the application servers; and
a time function modification unit 203 configured to modify, according to the time offset, time functions in database operation instructions generated by the application servers, to implement cross-time domain consistency in the distributed system.

As an embodiment of the present patent, the application servers include application servers related to services in service simulation, and the database server includes database servers related to the services in the service simulation.

As an embodiment of the present patent, the application servers include multiple application servers in the distributed system, and the database server includes one or more database servers in the distributed system.

As an embodiment of the present patent, the application server synchronization unit 201 is specifically configured to select one application server as a time server, adjust a time of the time server to the target time, and synchronize times of the remaining application servers with the time of the time server by taking the time of the time server as a reference.

As an embodiment of the present patent, the apparatus further includes a timer 204 configured to provide a time interval, and the application server synchronization unit 201 synchronizes times of the remaining application servers with the time of the time server by taking the time interval as a cycle.

As an embodiment of the present patent, the time offset calculation unit 202 is specifically configured to acquire a time of the database server, subtract the time of the database server from the target time to obtain the time offset, and push the time offset to the application servers.

As an embodiment of the present patent, the time function modification unit 203 is specifically configured to modify time functions related to services in the database operation instructions generated by the application servers.

Through the apparatus in the embodiment of the present patent, the problem in the prior art that frequently modifying a time of a database server leads to database failure so that service simulation cannot be completed can be solved. For a distributed system, especially an application scenario which involves service simulation in the field of finance, the technical solution of the present patent can carry out financial service simulation flexibly as required, and obtain states of accounts in a future period of time, thus ensuring information security of users and financial institutions.

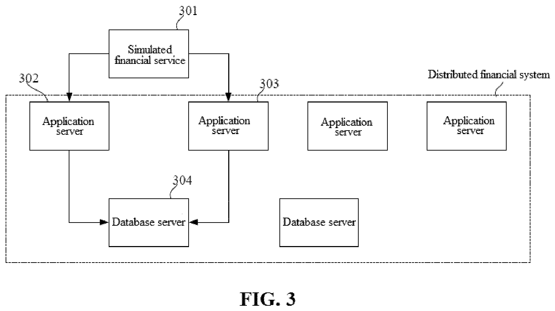

FIG 3 is a schematic structural diagram of a system for implementing cross-time domain consistency in a financial system according to an embodiment of the present patent.

In this embodiment, how the solution of implementing cross-time domain consistency in a distributed system is implemented is described by taking a financial application scenario as an example. The distributed financial system includes: a simulated financial service 301. The simulated financial service 301 is related to an application server 302, an application server 303, and a database server 304 respectively. The application server 302 is set as a time server, to serve as a time reference during the service simulation. The application server 302 and the application server 303 as well as the database server 304 are all devices related to the service simulation. The whole distributed financial system further includes other application servers or database servers.

In the example, the apparatus of the present patent is dispersed in the application server 302 and the application server 303 or is a separate computer. Those skilled in the art can understand that the apparatus of the present patent may be a software module that implements a corresponding function, and may also be a logic circuit that implements the corresponding function, which is not limited to an apparatus located in a spatial position. The apparatus may also be dispersed in related servers in the distributed financial system in the form of a functional unit or module, or may be an underlying framework structure of a server.

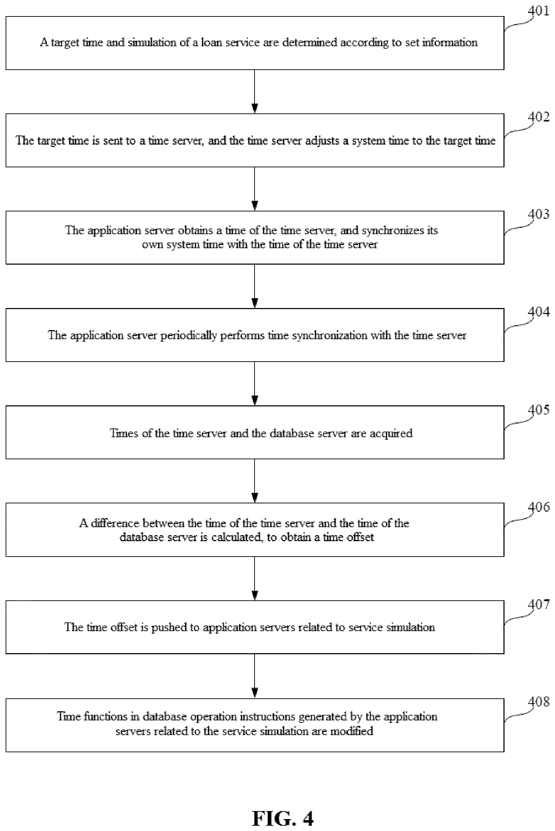

In this embodiment, a flowchart of a method for implementing cross-time domain consistency in a distributed financial system is shown in FIG 4, in which an application server 302 is set as a time server and times of other application servers need to be synchronized by taking the time of the application server 302 as a reference.

Referring to FIG 3 and FIG. 4, when a service time needs to be adjusted to a time in the future (a target time) in simulation of a financial service (simulation of a loan service), for example, the target time is 15:30 on April 2, 2015, the time of the application server 302 is 15:30 on April 1, 2015, the time of the application server 303 is 15:32 on April 1, 2015, and the time of the database server is 15:33 on April 1, 2015, it is necessary to add new interest data to the database server 304.

Step 401: A target time and simulation of a loan service are determined according to set information.

In this step, a target time and simulation of a loan service may be determined according to set information input by a user with an input device such as a mouse or a keyboard, so that application servers and database servers related to the simulation of the loan service may be obtained in a manner similar to the name of the service simulation and a list of associated devices. In order to simply describe the technical solution of the present patent, the application servers related to the loan service are an application server 302 and an application server 303, the associated database server is a database server 304, and the time server is the application server 302.

Step 402: The target time is sent to a time server, and the time server adjusts a system time to the target time. In this example, the application server 302 adjusts the system time to 15:30 on April 2, 2015.

Step 403: The application server obtains a time of the time server, and synchronizes its own system time with the time of the time server.

In this step, the application server 303 may actively acquire the time of the time server, thus implementing time synchronization, and the time server may also actively send a time synchronization instruction, which includes the time of the time server, to the application server 303, to instruct the application server 303 to perform time synchronization according to the time.

Specifically, the application server 303 synchronizes its own time 15:32 on April 1, 2015 into the time of the time server, i.e., 15:30 on April 2, 2015.

Step 404: The application server periodically performs time synchronization with the time server.

In this step, the application server 303 may calculate a time interval according to its own timer. Each time the time interval elapses, the application server 303 actively acquires a time from the time server, to perform time synchronization, or the time server has a timer for calculating a time interval, and each time the time interval elapses, the time server actively sends a synchronization instruction including a time to the application server 303, to instruct the application server 303 to perform time synchronization.

Specifically, after 10 minutes, the time of the application server 303 synchronized is 15:41 on April 2, 2015. In the manner of this step, the application server is synchronized with the time server by taking 10 minutes as a time interval. At this point, the time of the time server is 15:40 on April 2, 2015, and after synchronization, the time of the application server 303 is 15:40 on April 2, 2015.

Step 405: Times of the time server and the database server are acquired.

The time of the database server may be acquired by sending a time acquisition instruction to the database server 304, for example, a database instruction, select now() from dual. The instruction is acquiring the time of the database server.

In this example, the time of the database server is 15:33 on April 1, 2015 as described above, and the time of the time server is 15:30 on April 2, 2015.

Step 406: A difference between the time of the time server and the time of the database server is calculated, to obtain a time offset.

Specifically, according to that the time of the time server is 15:30 on April 2, 2015 and the time of the database server is 15:33 on April 1, 2015, it is obtained that a time offset is 23 hours and 57 minutes.

Step 407: The time offset is pushed to application servers related to service simulation.

In this step, the time offset is put in a multi-thread manner to be pushed to all application servers related to the simulation of the loan service. In this example, there are only the application server 302 and the application server 303, and the application server 302 is a time server. If the time offset is calculated on the time server, in this step, it is only necessary to put the time offset in a thread to be pushed to the application server 303. If the simulation of the loan service is further related to other application servers, the time offset may be pushed to all the related application servers at the same time in a multi-thread way. The application servers related to the services include application servers in the distributed system whose service times need to rely on the time of the database server.

Step 405 to step 407 may be performed on a separate device, and may also be performed on the application server 303. As a preferred embodiment, the above steps may be performed on a time server.

Step 408: Time functions in database operation instructions generated by the application servers related to the service simulation are modified.

As it is simulation of a loan service in this embodiment, which may produce interest on loan every day, the application server 303 generates a database operation instruction of adding an interest bearing record to the database. The database operation instruction includes a time function of interest bearing, for example, select now() from dual. A time function in the database operation instruction is modified, that is, select DATE_ADD(now(),INTERVAL A MINUTE) from dual, in which the now() function is a function of acquiring the time of the database server, INTERVAL A MINUTE is a time offset, DATE_ADD() is a function of adding the time offset to the time of the database, and dual is a database table. It can be seen that any desired time can be simulated when time offset is performed.

The application server may determine which time function needs to be modified in a manner of identifying time function method names in the database operation instruction, for example, time functions of OB and mysql are: now()/current_time()/current_timestamp()/strict_current_timestamp() and the like, and the time functions can flexibly support configuration of time functions requiring time offset and time functions not requiring time offset. In this case, synchronization of a service time recorded in the database with the time of the application server can be implemented without changing the time of the database server, which ensures cross-time domain consistency during simulation of a financial service.

In another embodiment, if multiple database servers and multiple application servers are involved in a service simulation, some application servers need to perform operations in one or more database servers, and the time of each database server may be different, then in step 405, it is necessary to obtain times of all the database servers and the time of the time server.

In step 406, differences between the time of the time server and the times of the multiple database servers are calculated respectively, to obtain multiple time offsets, and a matching relationship between each time offset and the corresponding database server is recorded.

In step 407, the corresponding time offsets are pushed, according to application servers related to service simulation and corresponding database servers, to the application servers.

In this step, one application server may need to send database operation instructions to several database servers, and time functions in the database operation instructions sent to the database servers all need to be modified differently, that is, a time offset between the time of a database server A and the target time is A, a time offset between the time of a database server B and the target time is B, a time offset between the time of a database server C and the target time is C, and the different time offsets are sent to the application server.

Step 408: The time functions in the database operation instructions sent by the application server to the different database servers are modified according to the corresponding time offsets.

Specifically, the time function in the database operation instruction sent by the application server to the database server A is modified according to the time offset A, the time function in the database operation instruction sent by the application server to the database server B is modified according to the time offset B, and the time function in the database operation instruction sent by the application server to the database server C is modified according to the time offset C.

Through the method and the apparatus in the embodiments of the present patent, time adjustment and switching in a distributed system can be implemented, especially for service simulation in a financial-level distributed system, failure of a database server may be avoided, so that security of data and information of a financial system can be detected.

An improvement on a technology may be obviously distinguished as an improvement on hardware (for example, an improvement on a circuit structure such as a diode, a transistor, and a switch) or an improvement on software (an improvement on a method procedure). However, with the development of technologies, improvements on many method procedures at present may be considered as direct improvements on hardware circuit structures. Almost all designers program the improved method procedures into hardware circuits to obtain corresponding hardware circuit structures. Therefore, it cannot be assumed that an improvement on a method procedure cannot be implemented by using a hardware entity module. For example, a Programmable Logic Device (PLD) (for example, a Field Programmable Gate Array (FPGA)) is such an integrated circuit, and logic functions thereof are determined by a user via programming its devices. Designers program by themselves to "integrate" a digital system into a piece of PLD, without inviting a chip manufacturer to design and manufacture a dedicated integrated circuit chip 2. Moreover, at present, the programming is mostly implemented by using "logic compiler" software, instead of manually manufacturing an integrated circuit chip. The software is similar to a software complier used for developing and writing a program, and original code before compiling also needs to be written in a specific programming language, which is referred to as a Hardware Description Language (HDL). There are many types of HDLs, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, and RHDL (Ruby Hardware Description Language), among which VHDL (Very-High-Speed Integrated Circuit Hardware Description Language) and Verilog2 are most commonly used now. Those skilled in the art also should know that a hardware circuit for implementing the logic method procedure may be easily obtained only by slightly logically programming the method procedure using the above several hardware description languages and programming it into an integrated circuit.

A controller may be implemented in any suitable manner. For example, the controller may be in the form of, for example, a microprocessor or a processor and a computer readable medium storing computer readable program codes (for example, software or firmware) executable by the (micro)processor, a logic gate, a switch, an Application Specific Integrated Circuit (ASIC), a programmable logic controller, and an embedded micro-controller. Examples of the controller include, but are not limited to, the following micro-controllers: ARC 625D, Atmel AT91SAM, Microchip PIC18F26K20, and Silicone Labs C8051F320. A memory controller may also be implemented as a part of control logic of a memory.

Those skilled in the art also know that, in addition to implementing the controller by using pure computer readable program codes, the method steps may be logically programmed to enable the controller to implement the same function in the form of a logic gate, a switch, an application specific integrated circuit, a programmable logic controller and an embedded microcontroller. Therefore, such a controller may be considered as a hardware component, and apparatuses included therein and configured to implement various functions may also be considered as structures inside the hardware component. Alternatively, further, the apparatuses configured to implement various functions may be considered as both software modules for implementing the method and structures inside the hardware component.

The system, apparatus, module or unit illustrated in the above embodiments may specifically be implemented by using a computer chip or an entity, or a product having a certain function.

For ease of description, when the apparatus is described, it is divided into various units in terms of functions for respective descriptions. Definitely, when the present patent is implemented, the functions of the units may be implemented in the same or multiple software and/or hardware.

Based on the foregoing descriptions of the implementation manners, those skilled in the art may clearly understand that the present patent may be implemented by software plus a necessary universal hardware platform. Based on such understanding, the technical solutions of the present patent essentially, or the portion contributing to the prior art may be embodied in the form of a software product. The computer software product may be stored in a storage medium, such as a ROM/RAM, a magnetic disk, or an optical disc, and include several instructions that enable a computer device (which may be a personal computer, a server, a network device, or the like) to execute the method in the embodiments or certain portions of the embodiments of the present patent.

The embodiments in the specification are described progressively, identical or similar parts of the embodiments may be obtained with reference to each other, and each embodiment emphasizes a part different from other embodiments. Especially, the system embodiment is basically similar to the method embodiment, so it is described simply. For related parts, refer to the descriptions of the parts in the method embodiment.

The present patent is applicable to various universal or dedicated computer system environments or configurations, such as, a personal computer, a server computer, a handheld device or a portable device, a tablet device, a multi-processor system, a microprocessor-based system, a set top box, a programmable consumer electronic device, a network PC, a minicomputer, a mainframe computer, and a distributed computing environment including any of the above systems or devices.

The present patent may be described in a common context of a computer executable instruction executed by a computer, for example, a program module. Generally, the program module includes a routine, a program, an object, an assembly, a data structure, and the like for executing a specific task or implementing a specific abstract data type. The present patent may also be practiced in a distributed computing environment, and in the distributed computing environment, a task is executed by using remote processing devices connected through a communication network. In the distributed computing environment, the program module may be located in a local and remote computer storage medium including a storage device.

Although the present patent is described through embodiments, those of ordinary skill in the art should know that the present patent has many variations and changes without departing from the present patent, and it is expected that the appended claims cover the variations and changes without departing from the present patent.

## Claims

1. A method for implementing cross-time domain consistency in a distributed system including a plurality of application servers and one or more database servers, both related to services in service simulation, comprising:
synchronizing times of the plurality of application servers according to a target time (101);
obtaining, through calculation, a time offset between the target time and a time of a database server (102) of the one or more database servers, wherein obtaining the time offset comprises:
acquiring the time of the database server, and
subtracting the time of the database server from the target time to obtain the time offset; receiving, at the plurality of application servers, the time offset; and
generating, by the plurality of application servers, database operation instructions configured to be performed at the database server (102) of the one or more database servers and including time functions,
wherein generating the database operation instructions includes
modifying, by the plurality of application servers, according to the time offset, all time functions of the time functions in a database operation instruction of the database operation instructions, the modified time functions related to the services in the service ; simulation performed with the database operation instructions generated by the plurality of application servers, wherein modifying is performed by adding the time offset to all the time functions in the database operation instruction from the database operation instructions to obtain a modified time and to implement cross-time domain consistency in the distributed system; and
sending, by an application server from the plurality of application servers, the database operation instruction with the modified time functions to the database server (102) of 2. the one or more database servers for execution.

2. The method of claim 1, wherein synchronizing times of the plurality of application servers according to the target time further comprises:
selecting one application server as a time server, adjusting a time of the time server to the target time, and
synchronizing times of the remaining application servers with the time of the time server by taking the time of the time server as a reference.

3. The method of claim 2, wherein synchronizing the times of the remaining application servers with the time of the time server by taking the time of the time server as the reference further comprises:
synchronizing the times of the remaining application servers with the time of the time server by taking a time interval as a cycle.

4. The method of claim 1, wherein generating the database operation instructions includes modifying, according to the time offset, all of the time functions in the database operation instructions generated by the application servers related to services in the service simulation.

5. An apparatus for implementing cross-time domain consistency in a distributed system including a plurality of application servers and one or more database servers, both related to services in service simulation, wherein the apparatus is configured to implement functions as both software modules and structures inside the hardware component, and wherein the software modules are configured for implementing the method according to any one of claims 1 to 4.

## Patentansprüche

1. Verfahren zum Implementieren von zeitdomänenübergreifender Konsistenz in einem verteilten System mit einer Vielzahl von Anwendungsservern und einem oder mehreren Datenbankservern, die sich beide auf Dienste in der Dienstsimulation beziehen, umfassend:
Synchronisieren von Zeiten der Vielzahl von Anwendungsservern gemäß einer Zielzeit (101);
Erhalten, durch Berechnung, eines Zeitversatzes zwischen der Zielzeit und einer Zeit eines Datenbankservers (102) des einen oder der mehreren Datenbankserver, wobei das Erhalten des Zeitversatzes umfasst:
Beziehen der Zeit des Datenbankservers, und Subtrahieren der Zeit des Datenbankservers von der Zielzeit, um den Zeitversatz zu erhalten;
Empfangen des Zeitversatzes an der Vielzahl von Anwendungsservern; und
Erzeugen, durch die Vielzahl von Anwendungsservern, von Datenbankoperationsanweisungen, die so konfiguriert sind, dass sie auf dem Datenbankserver (102) des einen oder der mehreren Datenbankserver ausgeführt werden und Zeitfunktionen enthalten, wobei das Erzeugen der Datenbankoperationsanweisungen das Modifizieren, durch die Vielzahl von Anwendungsservern, aller Zeitfunktionen der Zeitfunktionen in einer Datenbankoperationsanweisung der Datenbankoperationsanweisungen gemäß dem Zeitversatz umfasst, wobei die modifizierten Zeitfunktionen, die sich auf die Dienste in der Dienstsimulation beziehen, mit den von den mehreren Anwendungsservern erzeugten Datenbankoperationsanweisungen durchgeführt werden, wobei das Modifizieren durch Hinzufügen des Zeitversatzes zu allen Zeitfunktionen in der Datenbankoperationsanweisung der Datenbankoperationsanweisungen durchgeführt wird, um eine modifizierte Zeit zu erhalten und eine zeitdomänenübergreifende Konsistenz in dem verteilten System zu implementieren; und
Senden der Datenbankoperationsanweisung mit den geänderten Zeitfunktionen von einem Anwendungsserver aus der Vielzahl der Anwendungsserver an den Datenbankserver (102) des einen oder der mehreren Datenbankserver zur Ausführung.

2. Verfahren nach Anspruch 1, wobei das Synchronisieren der Zeiten der Vielzahl von Anwendungsservern gemäß der Zielzeit weiter umfasst:
Auswählen eines Anwendungsservers als Zeitserver, Anpassen einer Zeit des Zeitservers an die Zielzeit, und Synchronisieren der Zeiten der übrigen Anwendungsserver mit der Zeit des Zeitservers, indem die Zeit des Zeitservers als Referenz genommen wird.

3. Verfahren nach Anspruch 2, wobei das Synchronisieren der Zeiten der verbleibenden Anwendungsserver mit der Zeit des Zeitservers durch Verwendung der Zeit des Zeitservers als Referenz weiter umfasst:
Synchronisieren der Zeiten der verbleibenden Anwendungsserver mit der Zeit des Zeitservers, indem ein Zeitintervall als ein Zyklus genommen wird.

4. Verfahren nach Anspruch 1, wobei die Erzeugung der Datenbankoperationsanweisungen das Modifizieren aller Zeitfunktionen der in den von den Anwendungsservern erzeugten Datenbankoperationsanweisungen, die sich auf Dienste in der Dienstsimulation beziehen, entsprechend dem Zeitversatz einschließt.

5. Vorrichtung zum Implementieren von zeitdomänenübergreifender Konsistenz in einem verteilten System mit einer Vielzahl von Anwendungsservern und einem oder mehreren Datenbankservern, die sich beide auf Dienste in der Dienstsimulation beziehen, wobei die Vorrichtung so konfiguriert ist, dass sie Funktionen sowohl als Softwaremodule als auch als Strukturen innerhalb der Hardwarekomponente implementiert, und wobei die Softwaremodule so konfiguriert sind, dass sie das Verfahren gemäß einem der Ansprüche 1 bis 4 implementieren.

## Revendications

1. Procédé destiné à la mise en œuvre d'une cohérence de domaine temporel croisé dans un système distribué comportant une pluralité de serveurs d'applications et un ou plusieurs serveurs de bases de données, tous liés à des services dans la simulation de service, comprenant :
la synchronisation des heures de la pluralité de serveurs d'applications en fonction d'une heure cible (101) ;
l'obtention, par le calcul, d'un décalage temporel entre l'heure cible et une heure d'un serveur de bases de données (102) du ou des serveurs de bases de données, dans lequel l'obtention du décalage temporel comprend :
l'acquisition de l'heure du serveur de bases de données et la soustraction de l'heure du serveur de bases de données de l'heure cible pour obtenir le décalage temporel ;
la réception, au niveau de la pluralité de serveurs d'applications, du décalage temporel ; et
la génération, par la pluralité de serveurs d'applications, d'instructions d'opération de base de données configurées pour être effectuées sur le serveur de bases de données (102) du ou des serveurs de bases de données et comportant des fonctions temporelles, dans lequel la génération des instructions d'opération de base de données comprend la modification, par la pluralité de serveurs d'applications, selon le décalage temporel, de toutes les fonctions temporelles des fonctions temporelles dans une instruction d'opération de base de données des instructions d'opération de base de données, les fonctions temporelles modifiées liées aux services dans la simulation de service effectuée avec les instructions d'opération de base de données générées par la pluralité de serveurs d'applications, dans lequel la modification est effectuée en ajoutant le décalage temporel à toutes les fonctions temporelles dans l'instruction d'opération de base de données à partir des instructions d'opération de base de données pour obtenir une heure modifiée et pour mettre en œuvre la cohérence de domaine temporel croisé dans le système distribué ; et
l'envoi, par un serveur d'applications à partir de la pluralité de serveurs d'applications, de l'instruction d'opération de base de données avec les fonctions temporelles modifiées au serveur de bases de données (102) du ou des serveurs de bases de données pour exécution.

2. Procédé selon la revendication 1, dans lequel la synchronisation des heures de la pluralité de serveurs d'applications en fonction de l'heure cible comprend en outre :
la sélection d'un serveur d'applications comme serveur temporel, le réglage de l'heure du serveur temporel à l'heure cible et la synchronisation des heures des autres serveurs d'applications avec l'heure du serveur temporel en prenant l'heure du serveur temporel comme référence.

3. Procédé selon la revendication 2, dans lequel la synchronisation des heures des serveurs d'applications restants avec l'heure du serveur temporel en prenant l'heure du serveur temporel comme référence comprend en outre :
la synchronisation des heures des serveurs d'applications restants avec l'heure du serveur temporel en prenant un intervalle temporel comme cycle.

4. Procédé selon la revendication 1, dans lequel la génération des instructions d'opération de base de données comprend la modification, selon le décalage temporel, de toutes les fonctions temporelles dans les instructions d'opération de base de données générées par les serveurs d'applications liés aux services dans la simulation de service.

5. Appareil destiné à la mise en œuvre de la cohérence de domaine temporel croisé dans un système distribué comportant une pluralité de serveurs d'applications et un ou plusieurs serveurs de bases de données, tous liés à des services de simulation de service, dans lequel l'appareil est configuré pour mettre en œuvre des fonctions à la fois de modules logiciels et de structures logicielles à l'intérieur du composant matériel, et dans lequel les modules logiciels sont configurés pour mettre en œuvre le procédé selon l'une quelconque des revendications 1 à 4.
